# EUROPEAN PATENT APPLICATION

(11) **EP 4 752 336 A1**
(43) Date of publication of application: **03.06.2026**
(21) Application number: 25219181.2
(22) Date of filing: 27.11.2025
(51) Int. Cl.: F01D 21/00, F02C 7/32, F02C 7/36

(54) **WINDMILLING LOCKING METHOD AND SYSTEMS FOR GAS TURBINE ENGINES**

(30) Priority: 27.11.2024 US 202418962587
(71) Applicant: Pratt & Whitney Canada Corp., (01BE5) Longueuil, QC J4G 1A1 (CA)
(72) Inventor: KESEK, Mateusz, (01BE5) Longueuil, J4G 1A1 (CA)
(74) Representative: Dehns

(57) **Abstract**

An anti-windmilling control method for a gas turbine engine (20...600) including an engine shaft (404;610) with a rotating component and an accessory gearbox (234,236) each operably coupled to the engine shaft (404;610), an accessory locking brake (312;314;604) operably connected to the accessory gearbox and configured to selectively control operation of at least one gear of the accessory gearbox, and a controller (212;602) arranged in communication with the accessory locking brake, the method including: determining, with the controller, that the gas turbine engine is at altitude; determining, with the controller, that the gas turbine engine is in a state of windmilling; and in response to determining that the gas turbine engine is in the state of windmilling, activating the accessory locking brake to engage with the at least one gear to prevent rotation of the at least one gear, thereby halting rotation of the engine shaft and the rotating component.

## Description

### BACKGROUND

Illustrative embodiments pertain to the art of turbomachinery, and to turbine rotor components thereof, and more particularly to windmilling locking systems for gas turbine engines.

In typical jet turbine engine architectures, mechanical components such bearings and gears are not designed to operate for extended time without oil lubrication. The oil provides a thin film between rotating and static components, reducing friction and thus minimizing, reducing, or preventing material wear and tear. Oil is usually delivered to and drained from the bearings and gears using various pumping systems (e.g., main and scavenge pumps) installed at or in accessory gearboxes. The accessory gearboxes are configured to be mechanically driven from a low speed turbine rotor, a high speed turbine rotor, a power turbine rotor, or combinations thereof.

For various engine configurations (e.g., jet turbine, hybrid electric, hydrogen powered, etc., and/or combinations thereof), there may be a need to turn-off the turbine engines after take-off to save fuel and/or to minimize engine utilization and use alternative propulsion mechanisms. In such instances, after the engine is shutdown, air will continue to pass through the engine gas path, because the inlet is not sealed or closed during engine shutdown, particularly while in flight. The continuous supply of air into and through the engine gas path can lead to engine windmilling conditions. Engine windmilling occurs when the engine is not powered but the turbine engine rotor continues to rotate due to the passing airflow. Conventional engine designs are not able to tolerate extended windmilling. For example, the angular velocity of the turbine engine rotor under windmilling conditions may be significantly lower than powered operating speeds. This relatively low rotation can lead to significantly reduced engine lubrication, which in turn can lead to component wear and/or damage. Accordingly, improved systems to address windmilling conditions and prevent wear or damage can improve engine performance, life, and operation.

### BRIEF DESCRIPTION

According to one aspect of the present invention, there is provided an anti-windmilling control method for a gas turbine engine, the gas turbine engine including an engine shaft with a rotating component and an accessory gearbox each operably coupled to the engine shaft, an accessory locking brake operably connected to the accessory gearbox and configured to selectively control operation of at least one gear of the accessory gearbox, and a controller arranged in communication with the accessory locking brake, the method including: determining, with the controller, that the gas turbine engine is at altitude; determining, with the controller, that the gas turbine engine is in a state of windmilling; and in response to determining that the gas turbine engine is in the state of windmilling, activating the accessory locking brake to engage with the at least one gear to prevent rotation of the at least one gear, thereby halting rotation of the engine shaft and the rotating component.

Optionally, and in accordance with the above, the determining of the state of windmilling is determined based on an engine shutdown command received at the controller.

Optionally, and in accordance with any of the above, a sensor configured to monitor an engine angular speed is provided, wherein the determining the state of windmilling is based on detection of an engine angular speed that is below a predetermined threshold.

Optionally, and in accordance with any of the above, the predetermined threshold is an angular rotational speed below which lubrication of components of the gas turbine engine is reduced due to low rotational speeds of the components of the gas turbine engine.

Optionally, and in accordance with any of the above, the controller is a general aircraft controller.

Optionally, and in accordance with any of the abovethe accessory gearbox is arranged at an aft end of the gas turbine engine.

Optionally, and in accordance with any of the above, the accessory gearbox is arranged at a forward end of the gas turbine engine.

Optionally, and in accordance with any of the above, the rotating component is a fan of the gas turbine engine.

Optionally, and in accordance with any of the above, the rotating component is a turbine of the gas turbine engine.

Optionally, and in accordance with any of the above, the accessory locking brake is configured as a mechanical brake configured to stop rotation of the at least one gear.

Optionally, and in accordance with any of the above, the accessory locking brake is configured as a magnetic brake configured to stop rotation of the at least one gear.

Optionally, and in accordance with any of the above, the accessory locking brake is configured as an electric brake configured to stop rotation of the at least one gear.

Optionally, and in accordance with any of the above, the accessory locking brake is configured as a pneumatic brake configured to stop rotation of the at least one gear.

According to another aspect of the present invention, there is provided a gas turbine engine including: an engine shaft; a rotating component operably connected to the engine shaft; an accessory gearbox operably connected to the engine shaft, the accessory gearbox including a plurality of gears; an accessory locking brake operably connected to the accessory gearbox and configured to selectively control operation of a gear of the plurality of gears of the accessory gearbox; and a controller arranged in communication with the accessory locking brake, the controller configured to: determine that the gas turbine engine is at altitude; determine that the gas turbine engine is in a state of windmilling; and in response to determining that the gas turbine engine is in the state of windmilling, send a signal to the accessory locking brake to activate and engage with the gear to prevent rotation of the gear, thereby halting rotation of the engine shaft and the rotating component.

Optionally, and in accordance with any of the above, the rotating component is a fan.

Optionally, and in accordance with any of the above, the rotating component is a turbine.

Optionally, and in accordance with any of the above, the accessory locking brake is configured as one of a mechanical brake, a magnetic brake, an electric brake, or a pneumatic brake configured to stop rotation of the gear.

Optionally, and in accordance with any of the above, a sensor configured to monitor an engine angular speed is provided and arranged in communication with the controller, wherein the determining the state of windmilling is based on detection of an engine angular speed that is below a predetermined threshold.

Optionally, and in accordance with any of the above, the predetermined threshold is an angular rotational speed below which lubrication of components of the gas turbine engine is reduced due to low rotational speeds of the components of the gas turbine engine.

Optionally, and in accordance with any of the above, the accessory gearbox is arranged at an aft end of the gas turbine engine.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be illustrative and explanatory in nature and non-limiting.

### BRIEF DESCRIPTION OF THE DRAWINGS

The following descriptions should not be considered limiting in any way. With reference to the accompanying drawings, like elements are numbered alike: The subject matter is particularly pointed out and distinctly claimed at the conclusion of the specification. The foregoing and other features, and advantages of the present disclosure are apparent from the following detailed description taken in conjunction with the accompanying drawings in which like elements may be numbered alike and:
FIG. 1 is a schematic illustration of a gas turbine engine that may incorporate embodiments of the present disclosure;
FIG. 2 is a schematic illustration of a gas turbine engine incorporating an embodiment of the present disclosure;
FIG. 3 is a schematic illustration of an alternative configuration of a gas turbine engine incorporating an embodiment of the present disclosure;
FIG. 4A is a schematic illustration of a portion of a gas turbine engine incorporating an embodiment of the present disclosure;
FIG. 4B illustrates additional components of the portion of the gas turbine engine shown in FIG. 4A;
FIG. 5A is a schematic illustration of a portion of a gas turbine engine in accordance with an embodiment of the present disclosure;
FIG. 5B is a cross-sectional view of the portion of the gas turbine engine shown in FIG. 5A;
FIG. 6 is a schematic illustration of an anti-windmilling system for a gas turbine engine illustrating an embodiment of the present disclosure; and
FIG. 7 is an anti-windmilling control process or method for use with a gas turbine engine in accordance with an embodiment of the present disclosure.

### DETAILED DESCRIPTION

Detailed descriptions of one or more embodiments of the disclosed apparatus and/or methods are presented herein by way of exemplification and not limitation with reference to the Figures.

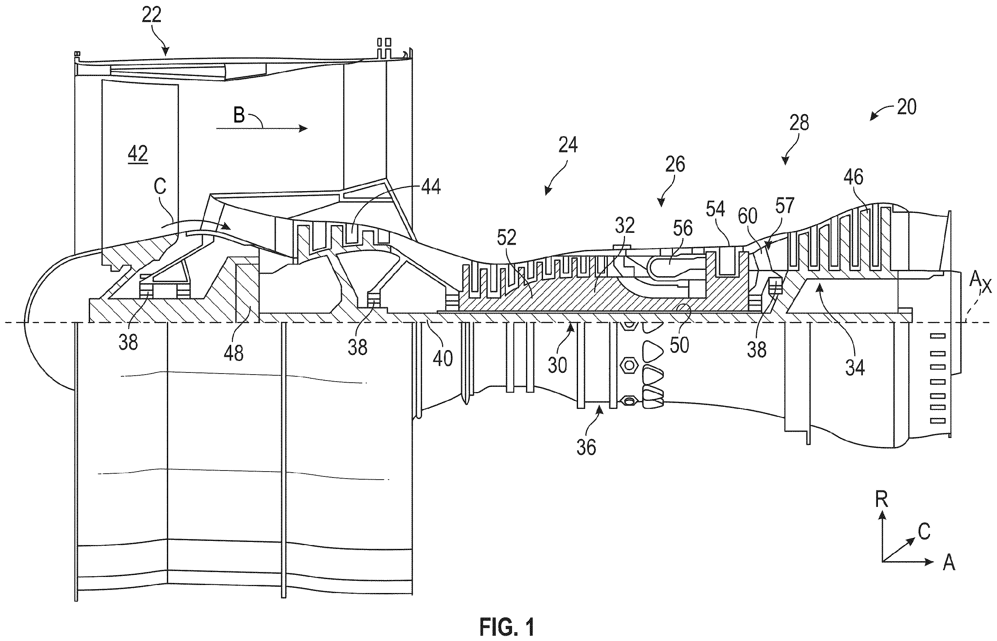

FIG. 1 schematically illustrates a gas turbine engine 20 that may incorporate embodiments of the present disclosure. The gas turbine engine 20 is disclosed herein as a two-spool turbofan that includes a fan section 22, a compressor section 24, a combustor section 26, and a turbine section 28. The fan section 22 is configured to be rotationally driven to drive air along a bypass flow path B in a bypass duct defined within a nacelle. A core flow path C is driven from the fan section 200 into the compressor section 24 for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines without departing from the scope of the present disclosure.

The gas turbine engine 20 includes a low speed spool 30 and a high speed spool 32 mounted for rotation about an engine central longitudinal axis Aₓ relative to an engine static structure 36 via several bearing systems 38. It should be understood that additional bearing systems 38 may be provided at various additional locations or may be provided at alternative locations, without departing from the scope of the present disclosure. The location and arrangement of the bearing systems 38 may be varied as appropriate to the application and/or engine configuration.

In the illustrative configuration, the low speed spool 30 includes an inner shaft 40 that interconnects a fan 42 of the fan section 22, a first (or low) pressure compressor 44, and a first (or low) pressure turbine 46. The inner shaft 40 is connected to the fan 42 through a speed change mechanism, which is illustrated as a geared architecture 48 to drive the fan 42 at a lower speed than the rotational speed of the low speed spool 30. The high speed spool 32 includes an outer shaft 50 that interconnects a second (or high) pressure compressor 52 and a second (or high) pressure turbine 54. A combustor 56 is arranged (along the axis Aₓ) between the high pressure compressor 52 and the high pressure turbine 54. A mid-turbine frame 57 of the engine static structure 36 is arranged between the high pressure turbine 54 and the low pressure turbine 46. The mid-turbine frame 57 is configured to support one or more bearing systems 38 in the turbine section 28. The inner shaft 40 and the outer shaft 50 are concentric and rotate via the bearing systems 38 about the engine central longitudinal axis Aₓ which is collinear with their longitudinal axes.

The air of the core flow path C is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils which are arranged in the core flow path C. The turbines 46, 54 rotationally drive the respective low speed spool 30 and high speed spool 32 in response to the expansion of the combusted mixture of air and fuel received from the combustor 56. It will be appreciated that each of the positions of the fan section 22, compressor section 24, combustor section 26, turbine section 28, and fan drive gear system 48 may be varied. For example, in other engine configurations, the gear system 48 may be located aft of combustor section 26 or aft of turbine section 28, and in some configurations the fan section 22 may be positioned forward or aft of the location of the gear system 48.

The gas turbine engine 20, shown in FIG. 1, is configured as a high-bypass geared aircraft engine. In some non-limiting examples of such high-bypass engines, the bypass ratio of the gas turbine engine 20 may be greater than about six (6), with an example embodiment being greater than about ten (10). In some configurations, the geared architecture 48 is configured as an epicyclic gear train, such as a planetary gear system or other gear system, with a gear reduction ratio of greater than about 2.3. In some configurations, the low pressure turbine 46 may be configured with a pressure ratio that is greater than about five (5). In one non-limiting embodiment, the bypass ratio may be greater than about ten (10:1), the fan diameter may significantly larger than that of the low pressure compressor 44, and the low pressure turbine 46 may have a pressure ratio that is greater than about five (5:1). A pressure ratio of the low pressure turbine 46 is a pressure measured prior to an inlet of low pressure turbine 46 as related to the pressure at the outlet of the low pressure turbine 46 prior to an exhaust nozzle. In accordance with some embodiments, the geared architecture 48 may be an epicycle gear train, such as a planetary gear system or other gear system, with a gear reduction ratio of greater than about 2.3:1. It should be understood, however, that the above parameters are only exemplary of one non-limiting embodiment of a gas turbine engine and that embodiments of the present disclosure are applicable to other configurations of gas turbine engines.

In operation, a significant amount of thrust may be provided by the bypass flow B due to the high bypass ratio of the gas turbine engine 20. The fan section 22 of the gas turbine engine 20 may be designed for particular flight condition(s)-typically cruise at about 0.8 Mach and altitude of about 35,000 feet (1066.8 meters). The flight condition of 0.8 Mach and 35,000 ft (1066.8 m), with the engine at its best fuel consumption-also known as "bucket cruise Thrust Specific Fuel Consumption ("TSFC")"-is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tᵣₐₘ °R)/(518.7° R)]^{0.5}. The "Low corrected fan tip speed" as disclosed herein according to one non-limiting embodiment is less than about 1150 ft/second (350.5 m/s).

In operation, under certain conditions, such as when the engine is shut down during flight (e.g., and propulsion is provided by other sources), rotation of the fan may continue to occur, even without the turbine section driving the shafts of the gas turbine engine. As the fan continues to rotate, connected components will also rotate. The rotation of the fan, when the gas turbine engine is shut down, may be due to wind or other atmospheric conditions. This rotation is referred to as windmilling (e.g., non-powered rotation), and can cause rotation in either a clockwise or counter-clockwise direction depending on the direction of the prevailing wind relative to the engine. Some components of the engine, such as journal bearings in a fan drive gear system, may be sensitive to wear in the absence of an active provision of lubrication. When an engine is shut down, active lubrication may be stopped. A delay between an initial occurrence of windmilling and application of either a lubricant or of an anti-windmilling system can result in undesirable wear on the engine components. Such a delay may be present in systems that utilize rotation due to windmilling to activate a brake or to power a lubrication system. Further, typical active lubrication systems utilize rotation of the engine to drive lubricant, and no lubricant is provided while the engine is inoperative.

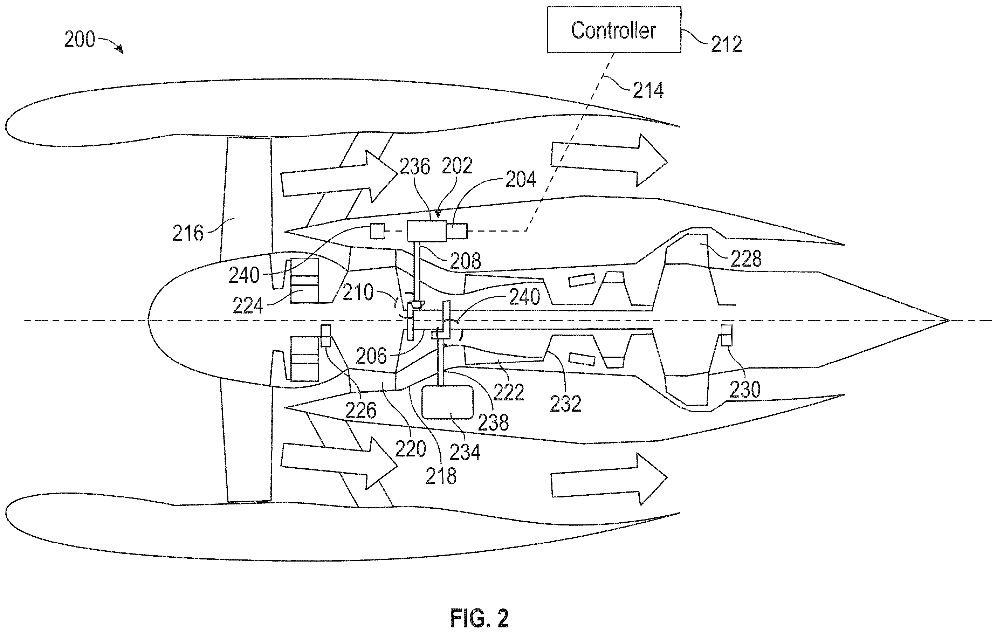

Referring now to FIG. 2, a schematic illustration of a gas turbine engine 200 including a mechanical anti-windmilling system 202 is shown. The anti-windmilling system 202 includes a brake 204 interfaced with a low speed shaft 206 via a gearing system. The illustrated gearing system utilizes a tower shaft 208 connected to the low speed shaft 206 via a beveled gear 210. The anti-windmilling system 202 is connected to a controller 212 via a control connection 214. The controller 212 is, in some non-limiting configurations and embodiments, a general aircraft controller configured to control multiple aircraft systems. In other configurations and embodiments, the controller 212 may be configured as a dedicated anti-windmilling controller communicatively coupled with one or more general engine controllers. The controller 212, in either configuration, may be configured to lock a fan 216 in order to prevent windmilling.

The anti-windmilling system 202 may be supported by an engine static structure in an intermediate case section 218 of the gas turbine engine 200. The intermediate case section 218 is positioned between a low pressure compressor section 220 and a high pressure compressor section 222. The intermediate case section 218 includes one or more struts configured to allow the passage of the tower shaft 208 through the primary flowpath. In other non-limiting configurations, the anti-windmilling system may be positioned proximate a fan drive gear system 224 at position 226 and/or the anti-windmilling system may be positioned aft of a low pressure turbine section 228 at position 230.

The brake 204 may be configured as any brake configuration strong enough to cease rotation of the fan 216 when the fan 216 is no longer being driven by the gas turbine engine 200. For example, the brake 204 may be configured to stop rotation of the fan 216 when the fan 216 is rotating below a shutoff threshold. The brake 204 may be configured to be strong enough to prevent rotation of the fan 216 while the engine 200 is inoperative. By way of example, the brake 204 can be a purely mechanical brake, an electromechanical brake, a magnetic brake, or any similar brake type. When the brake 204 is applied to the tower shaft 208, rotation of the tower shaft 208 is prevented. This, in turn, prevents rotation of the bevel gear 210, and rotation of the low speed shaft 206. Because the low speed shaft 206 is interfaced with the fan 216 through the fan drive gear system 224, when the brake 204 prevents the low speed shaft 206 from rotating the fan 216 will also be prevented from rotating, thereby preventing windmilling from occurring.

In the illustrative configuration, the gas turbine engine 200 includes the low speed shaft 206 and a high speed shaft 232. In some configurations, it may be desirable to extract rotational power from the shafts 206, 232 and/or to provide rotational power to other systems of the gas turbine engine 200 or of the aircraft. Depending on the magnitude of power desired to be extracted, the power can be extracted through a high speed accessory gearbox 234 and/or a low speed accessory gearbox 236. The high speed accessory gearbox 234 is operably connected to the high speed shaft 234 via a high speed tower shaft 238 and a respective beveled gear connection 240. The high speed accessory gearbox 234 may include a starter interface to transmit rotational power into the high speed shaft 232 to rotationally accelerate the high speed shaft 232 during an engine start sequence. Similarly, the low speed accessory gear box 236 is operably connected to the low speed shaft 206 via the tower shaft 208 (i.e., low speed tower shaft 208) and the respective beveled gear connection 210. It will be appreciated that alternative mechanical interfaces can be utilized in place of the described tower shaft and bevel gear assembly and systems, without departing from the scope of the present disclosure.

In some non-limiting embodiments, the accessory gearboxes 234, 236 can be connected to the corresponding shafts 206, 232 via alternative gearing systems configured to translate rotation of the corresponding shaft 206, 232 into the respective accessory gearbox 234, 236. Each of the accessory gearboxes 234, 236 may include a gearing system that can be interconnected with other engine systems 240 and can function to provide rotational power to the other engine systems 240. The illustrated location of the other engine systems 240 is purely for illustrative and explanatory purposes, and does not correlate to the actual location of any engine system that may be interfaced with the low speed accessory gearbox 236. In some systems including a low speed accessory gearbox, braking of the low speed shaft for anti-windmilling can be achieved by interfacing the brake system with the low speed accessory gearbox, and does not require a distinct brake tower shaft.

In the configuration shown in FIG. 2, the brake 204 is connected to, and interfaced with, the low speed accessory gearbox 236. The brake 204 is configured to manually engage a gearing system within the low speed accessory gearbox 236 in response to an actuation signal from the controller 212. The controller 212 is connected to the brake 204 via the control signal line 214. A similar connection between the controller 212 and the high speed accessory gearbox 234. Although not shown, in some configurations, the high speed accessory gearbox 234 may include a brake and may be similarly configured as the low speed accessory gearbox 236 and associated brake 204.

In an example operation of the gas turbine engine 200, the brake 204 is typically in an unengaged state. When the controller 212 detects that the engine 200 has begun a shutdown sequence, the controller 212 is configured to monitor the speed of the low speed shaft 206 using a shaft speed sensor. When the shaft speed falls below a predetermined threshold, the controller 212 will transmit a control signal along the control signal line 214. The control signal causes the brake 204 to engage with the gearing inside the low speed accessory gearbox 236. Engagement of the brake 204 can be in the form of a physical interfacing, application of an electromechanical brake, or engagement of a magnetic brake within the accessory gearbox 236. In some examples, the predetermined threshold is a speed below which the brake 204 is able to cease rotation of the fan 216 while rotation of the high speed shaft 232 continues to provide lubricant through an active lubrication system to any engine systems that need lubrication.

Engagement of the brake 204 prevents rotation of the gearing system inside the low speed accessory gearbox 236. The rotation prevention is translated through the tower shaft 208, into the low speed shaft 206, and ultimately through the fan drive gear system 224, thereby preventing the fan 216 from rotating due to windmilling.

Although the anti-windmilling systems described above may be used when an aircraft is grounded, to prevent unwanted rotation of the fan, there might be a need to turn-off the turbine engines after the take-off (e.g., while in flight and/or at altitude) to save fuel and/or minimize gas turbine engine utilization and to potentially use alternative propulsion systems. In such situation, after the gas turbine engine is shutdown, because the aircraft is still in flight air will continue to pass into and through the engine core flow gas path. The continued flow of air through the gas turbine engine may lead to engine windmilling conditions. That is, the turbine engine rotor may continue to rotate due to passing airflow even in a shutdown or off state. Typical gas turbine engine designs do not tolerate extended windmilling. This is because the turbine engine rotor angular velocity during windmilling conditions may be significantly lower than operating speed(s). The reduced rotational speeds under windmilling can lead to significantly reduced engine lubrication, thus resulting in potential for damage, wear, and other undesirable impacts on the gas turbine engine.

In accordance with embodiments of the present disclosure, anti-windmilling locking mechanisms and methods for use with gas turbine engines are provided for use during flight. Embodiments of the present disclosure are directed to the usage of locking systems to address rotor windmilling during flight, as compared to propeller brakes used during ground maintenance and/or handling. Embodiments are directed to locking the rotor and gearbox through a locking accessory that is mounted on a gearbox pad of a gearbox assembly. The locking accessory may be configured as a mechanical brake, an electric brake, an electromechanical brake, a pneumatical brake, and/or other type(s) of braking/locking systems and/or combinations thereof.

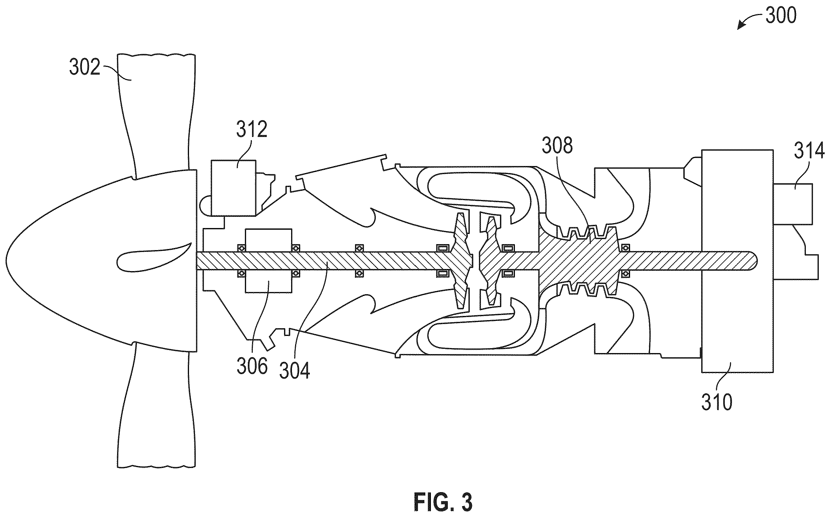

Referring now to FIG. 3, a schematic illustration of a gas turbine engine 300 in accordance with an embodiment of the present disclosure is shown. The gas turbine engine 300 includes a fan 302 that is driven by a first shaft 304 (e.g., low speed shaft) which includes a first gearbox 306. The gas turbine engine 300 also includes a second shaft 308 (e.g., high speed shaft) having an associated second gearbox 310. Each of the first gearbox 306 and the second gearbox 310 may include a number of accessory connections for inputting or outputting rotational energy to/from the gas turbine engine 300. In accordance with embodiments of the present disclosure, the first gearbox 306 and the second gearbox 310 may each include a respective accessory locking brake 312, 314. The accessory locking brakes 312, 314 may be mounted to a pad of the respective gearboxes 306, 310, or may be operably connected thereto. In each configuration, the accessory locking brakes 312, 314 are configured to apply a braking force or locking force to the respective gearboxes 306, 310 to thereby lock rotation of the gears of the respective gearboxes 306, 310. Due to the coupling between the gearboxes 306, 310 and the respective shafts 304, 308, by locking the gears of the gearboxes 306, 310 by engagement of the accessory locking brakes 312, 314, rotation of the shafts 304, 308 may be prevented. With prevention of rotation of the shafts 304, 308, windmilling of the fan 302 may be prevented.

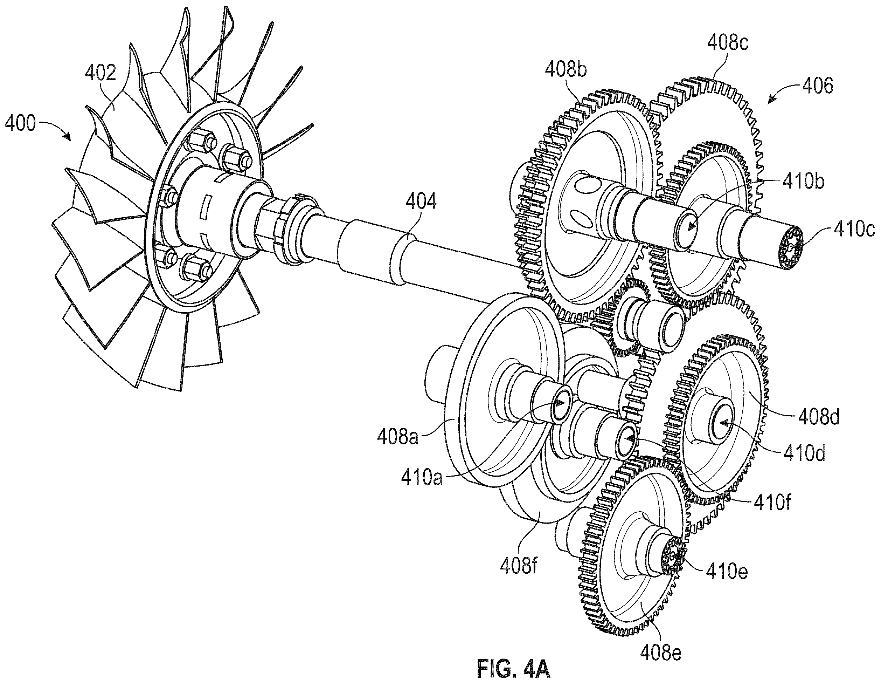

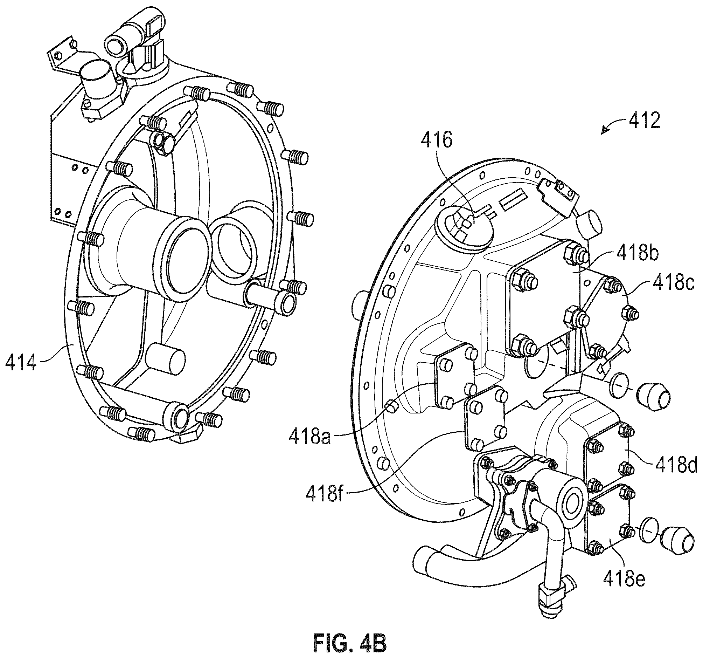

Referring now to FIGS. 4A-4B, schematic illustrations of a portion of a gas turbine engine 400 in accordance with an embodiment of the present disclosure are shown. FIG. 4A illustrates a turbine 402 connected to an engine shaft 404. Arranged at an end of the shaft 404 is a gearbox assembly 406 comprising a plurality of gears 408a-f that are configured to operably connect to accessory components via respective gear shafts or splines 410a-f. FIG. 4B illustrates a housing assembly 412 for installing over the components illustrated in FIG. 4A. For example, an engine housing 414 is shown for installation about the turbine 402 and the engine shaft 404. Further, a gearbox housing 416 is provided for installation about the gears 408a-f of the gearbox assembly 406. The gearbox housing 416 includes a set of respective accessory pads 418a-f for operably connecting an accessory component. For example, the accessory components may include, without limitation, fuel pumps, starter generators, and/or other pumps, generators, or other components that can receive rotational energy through the respective gear shafts 410a-f. In accordance with an embodiment of the present disclosure, a locking brake may be installed on one of the accessory pads 418a-f. The locking brake may be configured to be selectively operated to engage with a respective gear 408a-f to lock rotation of the gear, thereby stopping rotation of the gears 408a-f of the gearbox assembly 406 and thereby locking/stopping rotation of the shaft 404. The configuration shown in FIGS. 4A-4B may be representative of an aft-located gearbox assembly (e.g., second gearbox 310 shown in FIG. 3). It will be appreciated that a similar configuration may be provided for a forward-location gearbox assembly (e.g., first gearbox 306 shown in FIG. 3).

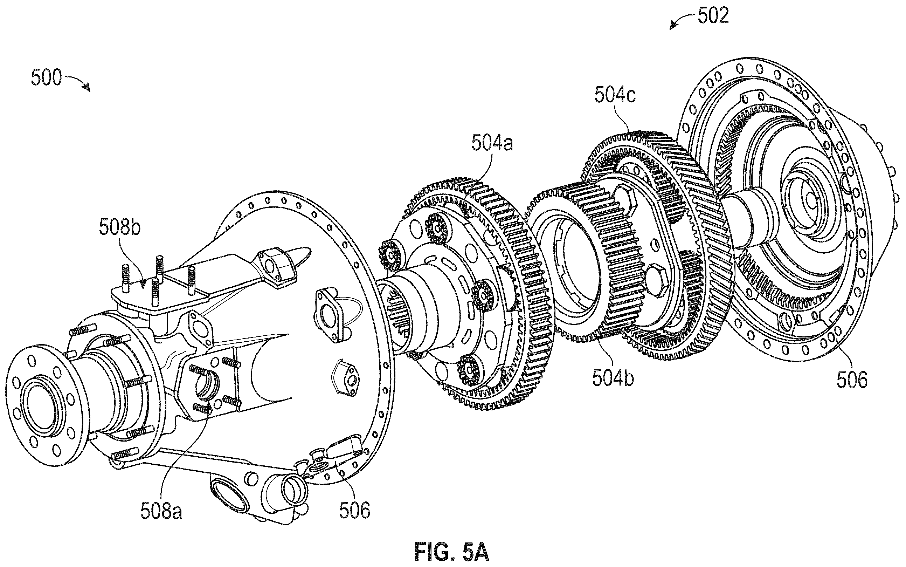

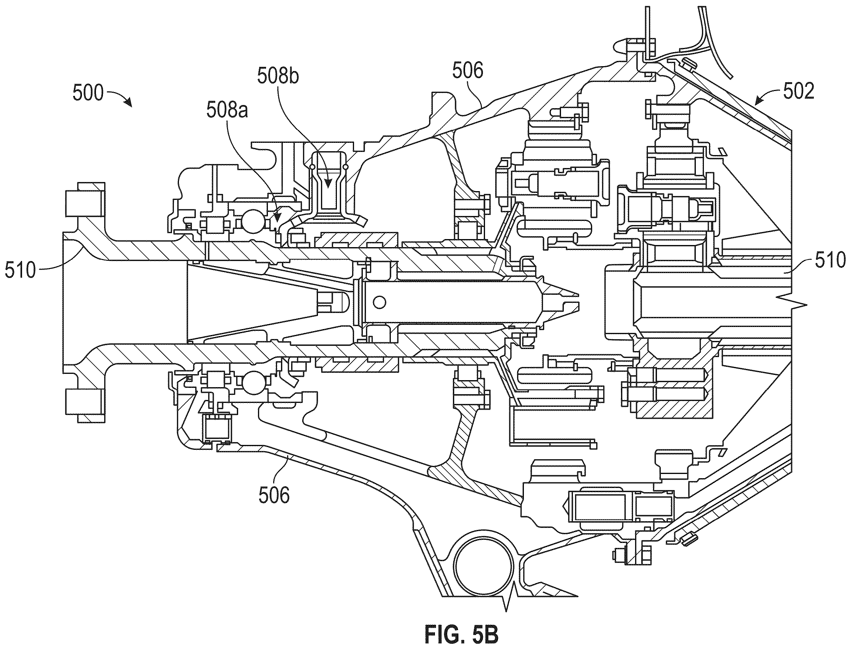

For example, referring now to FIGS. 5A-5B, schematic illustrations of a portion of a gas turbine engine 500 in accordance with an embodiment of the present disclosure are shown. FIG. 5A illustrates a reduction gearbox assembly 502 that is configured to operably connect to an engine shaft. The reduction gearbox assembly 502 includes a plurality of gears 504a-c that are configured to operably connect to accessory components via one or more gear shafts. FIG. 5B illustrates a cross-sectional illustration of the reduction gearbox assembly 502. A gearbox housing 506 is provided for installation about the gears 504a-c of the gearbox assembly 502. The gearbox housing 506 includes a set of accessory pads 508a-b for operably connecting an accessory component, as described above. In accordance with an embodiment of the present disclosure, a locking brake may be installed on one of the accessory pads 508a-b. The locking brake may be configured to be selectively operated to engage with a respective gear 504a-c or related component to lock rotation of the gear, thereby stopping rotation of the gears 504a-c of the gearbox assembly 502 and thereby locking/stopping rotation of a shaft operably connected to the gearbox assembly 502 (illustrated at connections 510).

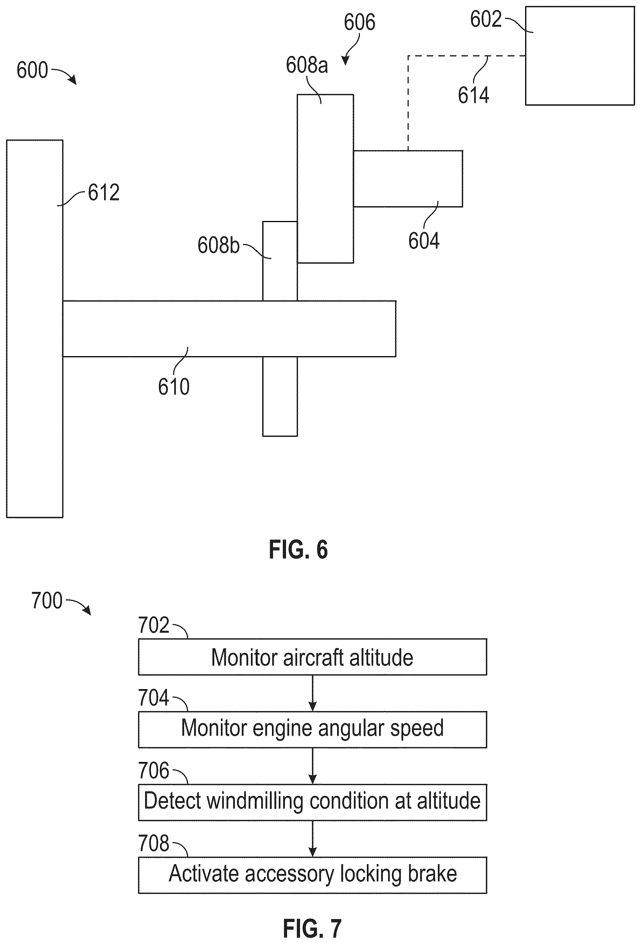

Referring now to FIG. 6, a schematic illustration of an anti-windmilling system 600 for a gas turbine engine in accordance with an embodiment of the present disclosure is shown. The anti-windmilling system 600 may be integrated into a gas turbine engine, similar to that shown and described above. The anti-windmilling system 600 includes a controller 602, an accessory locking brake 604, a gearbox assembly 606 having gears 608a-b, an engine shaft 610, and a fan 612. The gearbox assembly 606 operably couples to the engine shaft 610 with the gears 608a-b, and the engine shaft 610 is configured to drive rotation of the fan 612. During operation of an aircraft that incorporates the anti-windmilling system 600, the gas turbine engine may shut down during flight, such as during a controlled shut down to rely upon alternative propulsion and/or power sources. However, while the aircraft is in flight, air continues to pass into and through the gas turbine engine, as described above. The throughflow of air will cause the fan 612 to rotate. The rotation of the fan 612 may be at rotational speeds significantly less than operational rotational speeds of the gas turbine engine, resulting in potential issues due to lack of lubrication or the like. Accordingly, in response to an engine shut down command, the controller 602 may send a command signal along a control connection 614 to the accessory locking brake 604. The accessory locking brake 604 may engage and lock rotation (or stop rotation) of a connected gear 608a of the gearbox assembly 606. By stopping or locking rotation of one of the gears 608a-b of the gearbox assembly 606, the gearbox assembly 606 may be stopped, thereby stopping rotation of the shaft 610. Stoppage of the shaft 610 in turn stops rotation of the fan 612, thereby preventing windmilling of the engine that includes the anti-windmilling system 600. The accessory locking brake 604 may be configured as a mechanical braking or locking mechanism that engages with the connected gear 608a.

In other configurations, the accessory locking brakes of the present disclosure may be configured as an electronic brake, a magnetic brake, an electromagnetic brake, a pneumatic brake, or the like, as will be appreciated by those of skill in the art. The accessory locking brakes can be external accessories that are mounted either to pads of an accessory gearbox or reduction gearbox, as shown and described above. The accessory locking brakes may be mechanically connected to gearbox shafts via existing spline connections and/or gear shafts. In some configurations, the accessory locking brakes (or "rotor brake") may operate by generation of a resistance load (i.e., mechanically locking the rotor) by application of electromagnetic, magnetic, electric, mechanical, hydraulic, pneumatic, or other loads.

Referring now to FIG. 7, an anti-windmilling control process or method 700 for use with a gas turbine engine in accordance with an embodiment of the present disclosure is shown. The control process or method 700 may be employed using the above described systems and configurations, and variations thereon. The control process or method 700 may be implemented on a gas turbine engine having a controller and an accessory gear box operably connected to an engine shaft. The accessory gear box may include a number of gears having respective gear shafts or splines that allow for connection to a variety of accessory components. One of the accessory components is an accessory locking brake that is operably connected to one of the gears of the accessory gear box. The controller, which may be a dedicated or special purpose controller or a general aircraft controller. The engine shaft operably connects the accessory gear box to at least one fan (and/or turbine and/or compressor). The engine and/or the aircraft is configured with conventional sensors and monitoring elements to detect and sense a variety of properties and conditions of the aircraft, including, but not limited to, altitude, rotational speed of the engine shaft(s), and rotational speed of the fan.

In operation, at block 702, the controller is configured to monitor an altitude of the aircraft. Specifically, in accordance with embodiments of the present disclosure, the controller is configured to monitor an altitude of the aircraft and determine if the aircraft is in flight or not. The altitude information may be received from one or more aircraft systems, as will be appreciated by those of skill in the art. Additionally, the controller may receive other data indicative of a flight condition, as will be appreciated by those of skill in the art. In some such embodiments, multiple independent detections may be performed to ensure that improper operation is not triggered.

At block 704, the controller monitors an engine angular speed. The engine angular speed may be reflective of a rotational speed of the fan and/or turbine of the gas turbine engine. The controller is configured with a set of threshold information regarding operation of the gas turbine engine.

At block 706, the controller may detect a windmilling condition at altitude. For example, if at block 702 it is determined that the aircraft is at altitude or otherwise in flight and at block 704 if the detected engine angular speed is determined to be below a predetermined threshold, the controller may determine that the engine is in a state of windmilling. In some configurations, the controller may continuously monitor the operational states of the aircraft and engine, and thus may be configured to respond to events detected as windmilling. In other embodiments, or in combination therewith, the controller may be configured to receive data from other aircraft systems, including control commands, such as engine shutdown, as received from a cockpit or other onboard human or automated control system. Windmilling, in the context of the controller, is defined to be a detected engine angular speed (or speeds if multiple inputs are received) that exist below a predetermined threshold engine angular speed. The predetermined threshold engine angular speed may be an engine angular speed that is below an angular speed necessary to ensure proper lubrication of the components of the gas turbine engine.

Upon detection of a windmilling condition at block 706, an accessory locking brake may be activated at block 708. The activation of the accessory locking brake may be performed via a control command or command signal sent from the controller along a control connection to the accessory locking brake. In response to receiving the command signal, the accessory locking brake may activate, actuate, or otherwise operate to apply a braking force to a gear of the gearbox assembly. By stopping rotation of the gear connected to the accessory locking brake, all gears of the gearbox assembly may be stopped. With the gears stopped, a braking force may be applied to the engine shaft to thereby stop rotation of the fan (and/or turbine). With the engine shaft stopped and having active braking force applied thereto, the fan is prevented from rotating, and windmilling of the gas turbine engine is prevented.

Advantageously, embodiments of the present disclosure provide for improved anti-windmilling systems for gas turbine engines. In accordance with embodiments of the present disclosure, detection of an in-flight windmilling is performed and upon the presence of windmilling of the gas turbine engine, an accessory locking brake is applied to stop rotation of an engine shaft, to thereby stop rotation of a fan of the gas turbine engine. Advantageously, windmilling while at altitude is provided such that alternative propulsion systems (e.g., electric, hybrid electric, hydrogen, or the like) may be employed to power flight of the aircraft. During such alternative propulsion operations, the gas turbine engine may be completely shut down. While the engine is shut down, the accessory locking brake prevents the engine shaft from rotating and thus prevents windmilling from occurring. As such, wear, damage, or other impacts due to lack of lubrication during an engine shut down event may be avoided.

As used herein, the term "about" and "substantially" are intended to include the degree of error associated with measurement of the particular quantity based upon the equipment available at the time of filing the application. For example, these terms may include a range of ± 8%, or 5%, or 2% of a given value or other percentage change as will be appreciated by those of skill in the art for the particular measurement and/or dimensions referred to herein. Further, the terms "about" and "substantially", when associated with non-numerical limits, are intended to include degrees of errors and/or minor variations as would be apparent to those of skill in the art when considering such concepts (e.g., shapes, relative arrangements, etc.).

The terminology used herein is for the purpose of describing particular embodiments only and is not intended to be limiting of the present disclosure. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof. It should be appreciated that relative positional terms such as "forward," "aft," "upper," "lower," "above," "below," "radial," "axial," "circumferential," and the like are with reference to normal operational attitude and should not be considered otherwise limiting.

While the present disclosure has been described with reference to an illustrative embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. An anti-windmilling control method for a gas turbine engine (20;200;300;400;500;600) comprising an engine shaft (404;610), a rotating component and an accessory gearbox (234,236) each operably coupled to the engine shaft (404;610), an accessory locking brake (312;314;604) operably connected to the accessory gearbox (234,236) and configured to selectively control operation of at least one gear of the accessory gearbox (234,236), and a controller (212;602) arranged in communication with the accessory locking brake (312;314;604), the method comprising:
determining, with the controller (212;602), that the gas turbine engine (20...600) is at altitude;
determining, with the controller (212;602), that the gas turbine engine (20...600) is in a state of windmilling; and
in response to determining that the gas turbine engine (20...600) is in the state of windmilling, activating the accessory locking brake (312;314;604) to engage with the at least one gear to prevent rotation of the at least one gear, thereby halting rotation of the engine shaft (404;610) and the rotating component.

2. The method of claim 1, wherein the determining the state of windmilling is determined based on an engine shutdown command received at the controller (212;602).

3. The method of claim 1 or 2, further comprising a sensor configured to monitor an engine angular speed, wherein the determining the state of windmilling is based on detection of an engine angular speed that is below a predetermined threshold.

4. The method of claim 3, wherein the predetermined threshold is an angular rotational speed below which lubrication of components of the gas turbine engine (20...600) is reduced due to low rotational speeds of the components of the gas turbine engine (20...600).

5. The method of any preceding claim, wherein the controller (212;602) is a general aircraft controller.

6. The method of any preceding claim, wherein the accessory gearbox (234,236) is arranged at an aft end of the gas turbine engine (20...600).

7. The method of any of claims 1 to 5, wherein the accessory gearbox (234,236) is arranged at a forward end of the gas turbine engine (20...600).

8. The method of any preceding claim, wherein the rotating component is:
a fan (42;216;302;612) of the gas turbine engine (20...600); or
a turbine (402) of the gas turbine engine (20...600).

9. The method of any preceding claim, wherein the accessory locking brake (312;314;604) is configured as:
a mechanical brake;
a magnetic brake;
an electric brake; or
a pneumatic brake,
configured to stop rotation of the at least one gear.

10. A gas turbine engine (20...600) comprising:
an engine shaft (404;610);
a rotating component operably connected to the engine shaft (404;610);
an accessory gearbox (234,236) operably connected to the engine shaft (404;610), the accessory gearbox (234,236) comprising a plurality of gears (408a-f;504a-c);
an accessory locking brake (312;314;604) operably connected to the accessory gearbox (234,236) and configured to selectively control operation of a gear of the plurality of gears (408a-f;504a-c) of the accessory gearbox (234,236); and
a controller (212;602) arranged in communication with the accessory locking brake (312;314;604), the controller (212;602) configured to:
determine that the gas turbine engine (20...600) is at altitude;
determine that the gas turbine engine (20...600) is in a state of windmilling; and
in response to determining that the gas turbine engine (20...600) is in the state of windmilling, send a signal to the accessory locking brake (312;314;604) to activate and engage with the gear to prevent rotation of the gear, thereby halting rotation of the engine shaft (404;610) and the rotating component.

11. The gas turbine engine (20...600) of claim 10, wherein the rotating component is:
a fan (42...612); or
a turbine (402).

12. The gas turbine engine (20...600) of claim 10 or 11, wherein the accessory locking brake (312;314;604) is configured as :
a mechanical brake;
a magnetic brake;
an electric brake; or
a pneumatic brake,
configured to stop rotation of the gear.

13. The gas turbine engine (20...600) of any of claims 10 to 12, further comprising a sensor configured to monitor an engine angular speed and arranged in communication with the controller (212;602), wherein the determining the state of windmilling is based on detection of an engine angular speed that is below a predetermined threshold.

14. The gas turbine engine (20...600) of claim 13, wherein the predetermined threshold is an angular rotational speed below which lubrication of components of the gas turbine engine (20...600) is reduced due to low rotational speeds of the components of the gas turbine engine (20...600).

15. The gas turbine engine (20...600) of any of claims 10 to 15, wherein the accessory gearbox (234,236) is arranged at an aft end of the gas turbine engine (20...600).
